# EUROPEAN PATENT SPECIFICATION

(11) **EP 1 293 249 B1**
(45) Date of publication and mention of the grant of the patent: **15.11.2006**
(21) Application number: 01307819.1
(22) Date of filing: 13.09.2001
(51) Int. Cl.: B01J 20/18, B01D 53/04

(54) **Adsorbent compositions**
Adsorptionszusammensetzungen
Compositions adsorbantes

(30) Priority: 14.09.2000 US 661815
(43) Date of publication of application: 19.03.2003
(73) Proprietor: THE BOC GROUP, INC., New Providence, NJ 07974-2082 (US)
(72) Inventor: Bülow, Martin, Basking Ridge, New Jersey 07920 (US); Shen, Dongmin, Berkeley Heights, New Jersey 07922 (US)
(74) Representative: Wickham, Michael

(56) References cited:
- EP-A- 1 005 904
- EP-A- 1 046 422
- EP-A- 1 078 686
- US-A- 3 969 223
- US-A- 6 020 281

## Description

The present invention provides for new adsorbent designs for cyclic adsorption processes such as pressure swing and temperature swing adsorption for the purification and separation of gas mixtures. More particularly, the present invention provides for adsorbents made of an active component by shaping it into particles with a binder that contributes to improved intrinsic adsorption properties of the finished adsorbent particles.

Adsorption is well established as a unit operation for the production of pure gases, the purification of gases and their mixtures up-front their further physical and/or chemical handling, and for the treatment of fluid waste streams. Purification and separation of atmospheric air comprises one of the main areas in which adsorption methods are widely used. For an increase of their efficiency, novel adsorbent formularies and processes of their utilization are being sought permanently.

One of the areas of strong commercial and technical interest represents pre-purification of air before its cryogenic distillation. Conventional air separation units (ASUs) for the production of nitrogen, N₂, and oxygen, O₂, but also for argon, Ar, by the cryogenic separation of air are basically comprised of two or at least three, respectively, integrated distillation columns which operate at very low temperatures. Due to these low temperatures, it is essential that water vapor, H₂O, and carbon dioxide, CO₂, is removed from the compressed air feed to an ASU. If this is not done, the low temperature sections of the ASU will freeze up making it necessary to halt production and warm the clogged sections to revaporize and remove the offending solid mass of frozen gases. This can be very costly. It is generally recognized that, in order to prevent freeze up of an ASU, the content of H₂O and CO₂ in the compressed air feed stream must be less than 0.1 ppm and 1.0 ppm, respectively. Besides, other contaminants such as low-molecular-weight hydrocarbons and nitrous oxide, N₂O, may also be present in the air feed to the cryogenic temperature distillation columns, and they must as well be removed up-front the named separation process to prevent hazardous process regime.

A process and apparatus for the pre-purification of air must have the capacity to constantly meet the above levels of contamination, and hopefully exceed the related level of demand, and must do so in an efficient manner. This is particularly significant since the cost of the pre-purification is added directly to the cost of the product gases of the ASU.

Current commercial methods for the pre-purification of air include reversing heat exchangers, temperature swing adsorption, pressure swing adsorption and catalytic pre-purification techniques.

Reversing heat exchangers remove water vapor and carbon dioxide by alternately freezing and evaporating them in their passages. Such systems require a large amount, typically 50 % or more, of product gas for the cleaning, i.e., regenerating of their passages. Therefore, product yield is limited to about 50 % of feed. As a result of this significant disadvantage, combined with characteristic mechanical and noise problems, the use of reversing heat exchangers as a means of air pre-purification in front of ASUs has steadily declined over recent years.

In temperature swing adsorption (TSA) pre-purification of air, the impurities are removed from air at relatively low ambient temperature, typically at about (5 - 15)° C, and regeneration of the adsorbent is carried out at elevated temperatures, e.g., in a region of about (150 - 250)° C. The amount of product gas required for regeneration is typically only about (10 - 25) % of the product gas. Thus, a TSA process offers a considerable improvement over that of utilizing reverse heat exchangers. However, TSA processes require evaporative cooling or refrigeration units to chill the feed gas and heating units to heat the regeneration gas. They may, therefore, be disadvantageous both in terms of capital costs and energy consumption despite of being more cost-effective than the reversing heat exchangers' principle referred to above.

Pressure swing adsorption (PSA) (or pressure-vacuum swing adsorption (PVSA)) processes are an attractive alternative to TSA processes, for example, as a means of air pre-purification, since both adsorption and regeneration via desorption, are performed, as a rule, at ambient temperature. PSA processes, in general, do require substantially more regeneration gas than TSA processes. This can be disadvantageous if high recovery of cryogenically separated products is required. If a PSA air pre-purification unit is coupled to a cryogenic ASU plant, a waste stream from the cryogenic section, which is operated at a pressure close to ambient pressure, is used as purge for regenerating the adsorption beds. Feed air is passed under pressure through a layer of particles of activated alumina, to remove the bulk of H₂O and CO₂, and then through a layer of zeolite particles such as of the FAU structural type, e.g., NaX zeolite, to remove the remaining low concentrations of H₂O and CO₂. Arrangement of the adsorbent layers in this manner is noted to increase the temperature effects, i.e., temperature drops during desorption, in the PSA beds. In other configurations, only activated alumina is used to remove both H₂O and CO₂ from feed air. This arrangement is claimed to reduce the temperature effects.

It will be appreciated that, although many pre-purification methodologies based on PSA have been proposed in the literature, a few of those are actually being used commercially due to high capital costs associated therewith.

In general, known PSA pre-purification processes require a minimum of 25 %, typically (40 - 50) %, of the feed as purge gas. As a result of having low adsorbent specific product, such processes have high capital cost. Reduction in capital costs of air pre-purification systems is particularly important when a large plant is contemplated. Therefore, it will be readily appreciated that, for large plants, improvements in pre-purification system operation can result into considerable cost savings.

Efforts to develop more efficient adsorbent materials and less costly methods and equipment for their utilization in industrial processes of purification and separation of gases are constantly sought. The present invention provides for novel adsorbent formularies made of an active component by shaping it into particles with a binder that contributes to improved intrinsic adsorption properties of the finished adsorbent particles.

EP-A-1 046 422 discloses an adsorbent comprising an active component and a binder.

The present invention relates to improved adsorbents and their use for pressure swing and temperature swing adsorption in processes for purification and separation of gas mixtures. The improved adsorbents comprise specific formularies that optimize the binder content and its behavior in such a way that improved intrinsic adsorption properties of the finished adsorbent particles occur. The term *intrinsic* adsorption properties is being used here and further to characterize/name those adsorbent properties, viz., capacity and selectivity, that refer directly to the adsorption performance of the finished adsorbent particles with regard to the adsorption separation or purification process considered. These formularies comprise at least one active adsorbent component and one binder component. The active adsorbent components may comprise known adsorbent materials such as microcrystalline zeolites. The binder components that add binding and shaping properties to the finished adsorbent particles such as extrudates or beads, i.e., particles in the millimeter size range, will be manipulated in terms of types and their amounts such that improved intrinsic adsorption behavior of the finished adsorbent particles will result.

Regarding the finished adsorbent particles, it is known that, as a result of the binding procedure, the at least one active adsorbent component therein, for example, a microcrystalline zeolite material with specific intrinsic adsorption properties, is diluted exactly to the quantitative extent to which at least one binder component is added to the at least one active adsorbent component, if no damage to the active components takes place due to the finishing procedures, and so are the specific adsorption parameters of the finished material. The binding material attributes only mechanical strength and a stable and appropriate secondary pore system, to the finished adsorbent particles. Therefore, it behaves inert or passive as far as its contribution to the intrinsic adsorption properties, i.e., adsorption capacity and selectivity, of the finished material are concerned. Thus, the at least one binder can be considered as a "passive thinner". By use of the term "thinner", Applicants define it as a binder that delivers binding and shaping and, thus, mechanical strength, as well as macropore transport properties to enable usage of the finished adsorbent particles in large-scale adsorption equipment. Correspondingly, a "passive thinner" does not add to the intrinsic adsorption properties of the finished adsorbent particles. Contrarily, for the purpose of this invention, an "active thinner" can also be defined. This term defines a binder that, in addition to the named characteristics of a "passive thinner", contributes to the overall adsorption properties of the finished adsorbent particles, in particular to its intrinsic adsorption parameters such as its capacity and selectivity, in the range of physical parameters such as gas pressure, adsorption phase concentration (adsorbed amount) and temperature over which a pressure swing or temperature swing adsorption process will be executed for the purification and separation of gas mixtures.
Fig. 1 is a Graphical Representation of Experimental and Modeled Adsorption Isotherms for n-Butane on a High-silica MFI Structural Type Zeolite (Silicalite-1), a Binder and Various Zeolite (Z)-Binder (B) Compositions Denoted as ZX0BY0, at 25 °C.
Fig. 2 is a Graphical Representation of Working Adsorption Phase Capacities of n-Butane as Dependences, Δnₛ = f(C_{binder}), for "Passive Thinner" and "Active Thinner" Cases of High-silica MFI Structural Type Zeolite (Silicalite-1) with Varying Binder Content, Over a Pressure Range Shown, at 25 °C.
Fig. 3 is a Graphical Representation of Experimental and Modeled Adsorption Isotherms of n-Butane on a High-silica FAU Structural Type Zeolite, a Sepiolite Binder, and Various Zeolite (Z)-Binder (B) Compositions Denoted as ZX0BY0, at 45 °C.
Fig. 4. is a Graphical Representation of Working Adsorption Phase Capacities of n-Butane as Dependences, Δnₛ = f(C_{binder}), for Various "Active Thinner" Cases of a High-silica FAU Structural Type Zeolite with Varying PSA Process Pressure Ranges, at 45 °C.
Fig. 5 is a Graphical Representation of Working Adsorption Phase Capacities of n-Butane as Dependences, Δnₛ = f(c_{binder}), for a High-silica FAU Structural Type Zeolite with "Passive Thinner" (open circles) and "Active Thinner" (full squares) at Varying Binder Content, Over a Pressure Swing, (3600 ⇔ 900) torr, at 45 °C.

The improved adsorbents of this invention comprise specific formularies that optimize both content and behavior of the binder in such a way that improved adsorption properties of the finished adsorbent particles occur. These formularies comprise at least one active adsorbent component and one binder component. The active adsorbent component may be chosen from known adsorbent materials such as microcrystalline zeolites. The binder components that add binding and shaping properties to the finished adsorbent as extrudates or beads, i.e., particles in the millimeter size range, will be manipulated in terms of types and their amounts as well as their adsorption behavior such that improved intrinsic adsorption properties of the finished adsorbent particles will result.

Regarding the finished adsorbent particles, it is known that, as a result of the binding procedure, the at least one active adsorbent component therein, for example, a microcrystalline zeolite material with specific intrinsic adsorption properties, is diluted exactly to the quantitative extent to which at least one binder component is added to the at least one active adsorbent component, if no damage to the active adsorbent component takes place as a side effect during the finishing procedures of the overall manufacturing process. The intrinsic adsorption parameters of the finished material would have changed to the same quantitative extent. The binding material attributes to the finished adsorbent particles only mechanical strength and a stable and appropriate secondary pore system. Therefore, it behaves inert or passive as regards to its contribution to adsorption capacity and selectivity of the finished material particles. Thus, the at least one binder can be considered as a "passive thinner". By use of the term "thinner", Applicants define it as a binder that delivers binding and shaping and mechanical strength as well as macropore transport properties. Correspondingly, a "passive thinner" does not contribute to the intrinsic adsorption properties of the finished adsorbent particles. Contrarily, an "active thinner" can also be defined. This term defines a binder that, in addition to the named characteristics of a "passive thinner", contributes to the overall adsorption properties of the finished adsorbent particles, in particular to its intrinsic adsorption properties such as capacity and selectivity in the range of physical parameters such as gas pressure, adsorption phase concentration (adsorbed amount) and temperature over which a pressure swing or temperature swing adsorption process will be executed for the purification and separation of gas mixtures.

The present invention provides for novel adsorbent compositions that comprise at least one active adsorbent component and at least one thinner component, wherein their respective weight percentages in said adsorbent composition range from 20 % to 95 % and from 80 % to 5 %, characterised in that the said thinner component is active and contributes to the intrinsic adsorption properties of the adsorbent composition.

The at least one active component of the adsorbent material is selected from the group consisting of the zeolite structural types BEA, CHA, EMT, ERI, FAU, FER, HEU, LTA, LTL, MAZ, MEI, MEL, MFI, MOR, MTW, OFF, ZSM-2, ZSM-18, ZSM-20, or mixtures thereof. The abbreviations used herein correspond to those as defined for the various zeolite structural types, by the International Zeolite Association (IZA), cf., "Atlas of Zeolite Structure Types" by W.M. Meier, D.H. Olson and Ch. Baerlocher, Fourth Revised Edition, published by Elsevier, London, on behalf of the Structure Commission of the IZA, 1996.

These zeolites are microcrystalline and as such pulverulent with a size distribution of the microcrystals over a certain range. The zeolite microcrystals in their "as-synthesized" form have, as a rule, a primary dimension in the range of about (0.2 to 15) micron, and in preferred embodiments of the invention they have a primary particle dimension in the range of about (0.5 to 5) micron. For purposes of this invention, "primary particle dimension" is defined as the diameter characteristic of the size of a sphere circumscribing the averaged-size particle of the "as-synthesized" pulverulent product.

In a more preferred embodiment, the at least one zeolite is of the structural types EMT, FAU, LTA, MEL, MFI and ZSM-20 or mixtures thereof. Most preferably, the at least one zeolite is either of the FAU or MEL and MFI structural types. In this embodiment, the primary microcrystalline particles of the zeolites referred to the FAU structural type are either of high aluminum content referred to as zeolites of the X type, or they are aluminum-deficient, i.e., of high silicon content, referred to as zeolites of the Y type. In general, the X type zeolites can be defined as conventional X type zeolite having a silicon-to-aluminum atomic ratio in the range of 1.2 to about 1.5, medium-silicon type X zeolite (MSX), defined as type X zeolite having a silicon-to-aluminum atomic ratio in the range of 1.1 to about less than about 1.2, or low-silicon type X zeolite (LSX), defined as type X zeolite having a silicon-to-aluminum atomic ratio of 0.9 to about less than about 1.1. Although the theoretical minimum silicon-to-aluminum atomic ratio in zeolite X is 1.0, apparent silicon-to-aluminum atomic ratios of type X zeolites as low as 0.9 have been measured, due to defects in the structure of the zeolite, the presence of impurities, such as occluded alumina and/or aluminates and/or errors in measurement. For purposes of this description, it is assumed that the minimum silicon-to-aluminum ratio of type X zeolite is 0.9. In preferred embodiments of the invention, the agglomerate contains zeolite X having a silicon-to-aluminum atomic ratio in the range of about 0.9 to less than about 1.2, i.e., a combination of MSX and LSX, and, in more preferred embodiments, it contains substantially only LSX, and it can be composed substantially of zeolite calcium LSX (CaLSX).

On the other hand, aluminum-deficient FAU structural type zeolites, i.e., type Y zeolites, are well known. The Applicants will refer to them as to ultrastable Y type and dealuminated Y type zeolites. In another embodiment of this invention, the type Y zeolite has, preferably, a silicon-to-aluminum atomic ratio in the range of about 5 to about 300. More preferably, it has a silicon-to-aluminum atomic ratio in the range of about 10 to about 250. Most preferably, it has a silicon-to-aluminum atomic ratio in the range of about 20 to about 200.

The zeolites of the MFI and MEL structural types of this invention are preferably aluminum-deficient MFI and MEL zeolites that are also known as silicalite-1 and silicalite-2, respectively, or the related adsorbents are mixtures thereof. The low-silicon MEL and MFI structural type zeolites are also known as ZSM-11 and ZSM-5, respectively. Preferably, the type MFI and MEL zeolites have a silicon-to-aluminum atomic ratio in the range of about 15 to more than 1000. More preferably, they have a silicon-to-aluminum atomic ratio in the range of about 150 to about 1000. Most preferably, they have a silicon-to-aluminum atomic ratio in the range of about 500 to about 1000. The upper limit to the silicon-to-aluminum ratio, viz., the value 1000, has been set because of uncertainty margins as far as chemical analysis in this concentration range is concerned. It should be construed to cover all such obvious forms and modifications of materials that exceed this parameter value, as well.

As used herein, both the "inert thinner" and the "active thinner" may be an amorphous, partly crystalline or crystalline binder material. The "inert thinner" means any binder material composed of various types of clay, silica, alumina or combinations of these that are suitable for use in the agglomeration of the "as-synthesized" pulverulent (microcrystalline) zeolitic materials and their appropriate modifications, and which possesses, as a result of the agglomeration, negligibly little or no gas adsorption capability. Likewise, the "active thinner" means any binder material composed of various types of clay, silica, alumina or combinations of these that are suitable for use in the agglomeration of the "as-synthesized" pulverulent (microcrystalline) zeolitic materials and their appropriate modifications, and which possesses, as a result of the agglomeration and/or subsequent specific chemical or physical treatment an appreciable gas adsorption capability, without being converted, however, to a material identical with that of the active adsorbent component, i.e., the zeolite component itself.

It is well known to those skilled in the art and common industrial practice to manufacture bound and shaped adsorbent particles in which the binder materials are "inert thinners". Industrial processes of manufacture of such zeolite-binder composites by using clay-type materials in particular, have been described comprehensively by D.W. Breck, "Zeolite Molecular Sieves", Chapter 9, Krieger Publishing Company, Malabar, Florida, 1984 (Original Edition by Wiley, New York, 1974). Therein, but also in US 3,773,690 referred to here for the purpose of an example of related knowledge, procedures are mentioned in addition, in accordance to which a binder material could be converted into the same material such as the active adsorbent component of which the finished adsorbent particles are comprised. Such a situation would, however, be entirely different from that of the current invention because the former procedures lead to a binder-deficient or even binder-free composition for the finished adsorbent particles of which the active adsorbent component would represent at least about 95 % by weight. Moreover, it is well-known, that the majority of types of the finished adsorbent materials of the latter kind is not only comparatively expensive but such adsorbent materials may also be less appropriate for their use in PSA and PVSA processes, due to relatively steep slopes of adsorption isotherms at process temperatures which may lead to insufficient working capacities over given process pressure envelopes. On the other hand, lower slopes of adsorption isotherms which may be incurred by "thinning" the active component of the adsorbent to greater an extent than usual, may sometimes lead to an increase of the working capacity of the finished adsorbent particles within a given pressure envelope of a PSA process although the saturation capacity of those particles has decreased. The concept of "active thinners" as to the current invention fills the still existing gap between so-called "binderless" adsorbents and those with high content of binder being, however, inert as far as its intrinsic adsorption properties are concerned. This "active thinner" concept combines the advantages of low-cost materials with those of high performance with regard to a given adsorption process.

As to the current invention, adsorbents can be envisioned in case of which the process of either shaping and finishing their secondary particles or another additional chemical or physical treatment at any appropriate step of the complex manufacturing process, leads to the creation of binding components with the properties of "active thinners". The difference to the case of occurrence of "passive thinners" is based on the chemical composition and, thus, chemical properties and microparticle sizes of the binding materials themselves, which must be in the range of those of the active component. This may, either *per se* or due to a similarity to those properties of the microcrystalline zeolitic material, enforce a certain pattern of microporosity over the interface region between the active adsorbent component's microparticles and the "active thinner's" microparticles in that very place, which should be similar to that of the active adsorbent component in the finished adsorbent particle product. Appropriate choice of binding materials depends on the nature of the active adsorbent component. A high degree of correspondence between this component and the "thinner" is anticipated. Specific binding conditions chosen may favor the generation of a finished adsorbent product the binder therein having such "active thinner" properties. For example, clay-type binders could be chosen from the groups of attapulgite, bentonite, kaolin and sepiolite minerals. Suitable sources of silica include water glasses, silica sols, aerosils (fumed silicas), silica gels and precipitated silicas. Sources of alumina useful in preparing the adsorbent composites of the finished type, include also hydrated aluminum hydroxide, pseudo-boehmite, alumina trihydrate, etc.; and suitable kaolins such as raw kaolin, calcined kaolin, metakaolin, etc., and kandites, etc. Wanted cation compositions of the final "active thinner" phase can be taken care of by appropriate choice of binder compositions. Binary compositions of the above listed binders as well as of silica-alumina types and of other metal oxide types can also be chosen to be used in this invention to form materials with "active thinner" properties.

The adsorbent compositions can be prepared by any conventional methods depending upon the type of zeolite that is employed. The relative proportions of the at least one active adsorbent component and the at least one thinner component in the finished adsorbent used for gas adsorption applications, may vary over wide ranges. The desired active adsorbent component/thinner component ratio will depend, *inter alia,* upon the particular application for which the finished adsorbent particles will be utilized. It may be desirable to use ratios comprising as much as 95 % of the active adsorbent component, on a weight basis. On the other hand, it may be preferable to use finished adsorbent particles comprised predominantly of the "active thinner" component, in particular for economic reasons. In general, the finished adsorbent particles may contain (20 to 95) % of the at least one active adsorbent component and (80 to 5) % of the at least one "active thinner" component, based on the total weight of all components in the finished adsorbent particles. In preferred embodiments the finished adsorbent particles contain about (30 to 90) % by weight of the at least one active adsorbent component and about (70 to 10) % by weight of the at least one "active thinner" component. In most preferred embodiments the finished adsorbent particles contain about (40 to 85) % by weight of the at least one active adsorbent component and about (60 to 15) % by weight of the at least one "active thinner" component.

The adsorbent compositions of the present invention are used either in the form of shaped particles also known as secondary particles, or in monolithic and laminate arrangements. State-of-the-art methods are known to manufacture adsorbent monoliths and laminates. The named secondary particles may be shaped by a series of methods into various geometrical forms that allow their usage in the equipment, for example, in columns or beds of large-scale adsorption processes. In particular, the blended mixture of the at least one active adsorbent component and at least one "active thinner" is aggregated by any suitable of the known methods, for example, extrusion and pellet formation, or bead formation. During these processes, appropriately chosen organic materials such as those of cellulose-derivatives could be added to enhance an appropriate formation of macropores that are responsible for favorable mass transfer properties of the finished adsorbent particles. The agglomeration process is carried out under conditions that will produce "green" aggregates of a desired particle size. In general, the average dimension of the agglomerated particles will desirably be in the range of about (0.2 to 15) mm and will preferably be in the range of about (0.5 to 5) mm, and, most preferably, they will be in the range of about (1 to 3) mm. The "green" aggregates will be converted into the finished adsorbent particles by heating them in an appropriately chosen gas atmosphere to a temperature in the range of about (400 to 900) ° C for a sufficient period of time to effect the desired curing, burning-off the organic materials that enhance creation of certain macropore structural patterns, and removal of water. This temperature will preferably be in the range of (450 to 700) °C, and, most preferably, in the range of about (500 to 600) °C.

In the adsorption process of the present invention, a component of a gas mixture that is more strongly adsorbed than other components of the gas mixture is separated from the other components by contacting the gas mixture with the adsorbent composition under conditions that effect adsorption of the strongly adsorbed component. The process can be temperature swing adsorption or pressure swing adsorption, the latter including pressure-vacuum swing adsorption. Preferably this process is pressure swing adsorption.

The adsorption step of the process of the invention can be carried out at any of the usual and well-known pressures employed for gas phase temperature swing adsorption and pressure swing adsorption processes.

For temperature swing adsorption, the adsorption step can be carried out at absolute pressures as high as 50 bara or more, but is preferably carried out at absolute pressures below that and not greater than about 20 bara, and, most preferably, not greater than about 10 bara.

When the adsorption process is PSA, the pressure envelope of the process may vary widely. This pressure envelope ranges from the pressure at which adsorption takes place, to that at which desorption of gas from the adsorbent material is executed. This desorption step is also known as regeneration. The pressure envelope depends on many circumstances that may be due to technical considerations caused by the specific adsorption properties of the gas mixture considered in juncture with the adsorbent properties, but also on economic parameters. Typically, if the PSA process is a PVSA one, desorption is performed at a sub-atmospheric pressure, the pressure envelope ranges usually from an absolute pressure in the range of about 5 bara for the adsorption step to about 0.05 bara for the regeneration step, but preferably from an absolute pressure in the range of about 3 bara to about 0.15 bara, and most preferably from an absolute pressure in the range of about 1.5 bara for the adsorption step to about 0.2 bara for the regeneration step. If no sub-atmospheric pressures are utilized in a PSA process, as for example, referring to hydrocarbon-containing gas mixtures, the desorption or regeneration pressure is usually preferred to be 1 bara or in the vicinity of this pressure, up to 1.5 bara, but the adsorption pressure may again vary widely due to the specific adsorption properties of the gas components as exhibited for a given adsorbent material. Usually, the adsorption pressure is about 5 bara, but preferably about 3 bara, and, most preferably, about 2.5 bara.

For PSA and PVSA processes, the temperature at which the adsorption step is carried out, depends upon a number of factors, such as the particular gases being separated, their relative content in the gas mixture that faces purification or separation, the particular adsorbent being used, and the pressure at which the adsorption is carried out.

In general, the adsorption step of a PSA process is carried out at a temperature of at least about - 50° C, preferably at a temperature of at least about 0° C, and, most preferably, at a temperature of at least about 15° C. The upper temperature limit at which the adsorption step is carried out, is generally about 200° C, and the adsorption step is preferably carried out at a temperature not higher than about 100° C, and, most preferably, carried out at a temperature not higher than about 75° C.

In TSA processes, the adsorption step is generally carried out at a temperature in the range of about 5° C to about 50° C, and the adsorbent regeneration step is generally carried out at a temperature in the range of about 100° C to about 250° C.

In principle, the composition of the gas mixture to be purified or separated may vary widely. Concerning purification, as to this invention, removal of one or multiple trace impurities from a gas stream is understood to proceed in a concentration range from single digit percentage to ppm values down to concentrations as low as in the ppb region. Concerning separation of gas mixture components, their concentration in feed and product gases may be as high as dozens of percents and as low as low as in the single digit percent value range or even at the ppm level, respectively.

As indicated above, the process of the invention can be used to separate any two gases, provided that one of the gases is more strongly adsorbed by the adsorbents of the invention than the other gas is under either conditions of adsorption equilibrium or non-equilibrium, i.e., in the adsorption kinetic regime of a process. The process is particularly suitable for separating nitrogen from oxygen, nitrogen and argon from oxygen, carbon dioxide from air, nitrous oxide from air and for the separation of hydrocarbons, for example, the separation of alkenes, such as ethylene, propylene, etc., from alkanes, such as ethane, propane, etc., the separation of straight-chain hydrocarbons from branched-chain hydrocarbons, e.g., the separation of n-butane from iso-butane, and the separation of gaseous low-molecular-weight hydrocarbons from carbon dioxide. The separation of these gases is preferably carried out at ambient temperature or higher, although the separation of nitrogen, oxygen and argon can be carried out at cryogenic temperatures as well. Separation of gaseous low-molecular-weight hydrocarbons such as ethane, propane and n-butane from carbon dioxide might also be of interest, in particular if the gas stream contains moisture. For the purpose of such separations, hydrophobic cation-deficient zeolite materials such as of the MFI and MEL as well as FAU structural types with sufficiently high silicon-to-aluminum atomic ratios are appropriate adsorbent materials.

It will be appreciated that it is within the scope of the present invention to utilize conventional equipment to monitor and automatically regulate the flow of gases within the system so that it can be fully automated to run continuously in an efficient manner.

The invention will now be described with regard to particular examples that will deal with a demonstration of the unexpected "active thinner" properties of binders, in general, a teaching in preparation of particular adsorbents and their utilization for processes of purification of gases. The related examples and embodiments should not be construed as limiting the scope thereof.

### EXAMPLES

### EXAMPLE 1: Preparation of High-alumina FAU-type Zeolite Adsorbents with Passive and Active Thinner Properties.

Low silicon X (LSX) zeolite with a silicon-to-aluminum atomic ratio of 1.03 was synthesized according to procedures described in UK 1,580,928. The synthesis product that has sodium and potassium ions as exchangeable cations, was then converted into sodium LSX by four static exchanges with 20 ml of 1.0 N NaCl solution per g of zeolite at 80° C. After each exchange, the sample was washed with aqueous NaOH (0.01 N). Sodium cations were then exchanged *versus* calcium cations in accordance with the following procedure: 15 g of the filter cake (water content approx. 35 %) were suspended in 200 ml of distilled water. After 15 min of stirring, 29 g CaCl₂•H₂O were added. The resulting mixture was then heated under stirring to 60 °C and stirred at this temperature for 6 hr. The resulting hot suspension was quickly filtered and the filter cake washed with 3 portions of distilled water, 100 ml each. The washed filter cake was again suspended in 200 ml of distilled water. After 15 min of stirring, another 29 g CaCl₂•H₂O were added. The resulting mixture was then heated under stirring to 60 °C and stirred at this temperature for another 6 hr. The resulting hot suspension was quickly filtered, and the double-exchanged filter cake washed with 3 portions of distilled water, 100 ml each, and slightly dried at 60 °C.

The analysis of the dried material showed an ion exchange of calcium for sodium of at least 95 %. The resulting calcium LSX powder was then granulated into bead shape. The beads were composed of c. 88 wt.-% CaLSX and 12 wt.-% SiO₂ as binder or "inert thinner". A portion of the resulting material was then dried and finished by known procedures of activation and calcination, at 580 °C in an inert gas stream (sample 1).

Another portion of the beaded material was treated with calcium hydroxo-aluminate, 2 Al(OH)₃ • 3 Ca(OH)₂, in excess of water, under continuous stirring at 65 °C for 3 hr. The amount of calcium hydroxo-aluminate was chosen such that the entire amount of binder the beads were comprised of originally, was, supposedly, given properties of an "active thinner". The resulting product was filtered, dried and activated under conditions identical to those for the first portion (sample 2).

### EXAMPLE 2: Preparation of High-silica FAU-type Zeolite Adsorbents with Passive and Active Thinner Properties.

A pulverulent (microcrystalline) high-silica FAU-type zeolite with a silicon-to-aluminum atomic ratio, 100, as manufactured and commercialized by Degussa-Hüls, Germany, as Wessalith-DAY, was used to prepare extrudates in accordance with related principles outlined in Example 3 of US 5,316,993. A low-aluminum-content sepiolite (Pansil 200) from Tolsa (Spain) was used as binder. For the purpose of macroporosity enhancement, a microcrystalline cellulose, NT-020, from FMC BioPolymer (USA), was used. The amounts of zeolite crystals and binder particles were chosen such as to prepare extrudates that contained 40 wt.-% of FAU-type material and 60 wt.-% of binder. The amount of the cellulose specimen added to the starting zeolite-binder mixture comprised 10 wt.-%, as referred to its dry weight. The finished adsorbent particles were prepared in two different ways. The first one had been in accordance as much as possible with the related part of the description given in Example 3 of US 5,316,993, although a laboratory pellet press was used to shape the mixture into macro particles similar to extrudates (sample 1). The second way included an intermediate step that comprised preparation of an aqueous suspension of the zeolite-binder-cellulose mixture and keeping it under continuous stirring at 65 °C for 3 hr. The solid product was filtered and dried at air until it reached a kneadable state. A laboratory pellet press was used to shape the mass into macro particles similar to extrudates (sample 2). Samples 1 and 2 arranged in shallow beds, were dried at 120 °C for two hours, heated at a rate of 100 °C/hr to 850 °C and kept at this temperature for another hour, under a stream of dry nitrogen.

### EXAMPLE 3: Adsorption of Nitrous Oxide on High-alumina FAU-type Zeolite Adsorbents with Passive and Active Thinner Properties.

Based on adsorption data for nitrous oxide, N₂O, on CaLSX bead samples 1 and 2 prepared as described in Example 1, as measured at a temperature, 25 °C, by means of a piezometric system as described by M. Bülow et al., J. Chem. Soc., Faraday Trans. I, vol. 79 (1983) 2457-2466, assessment was made as to what degree the binder might have assumed "active thinner" properties, as a consequence of the subsequent treatment of sample 2, in opposite to sample 1 that remained untreated. Adsorption data for N₂O at a temperature, 25 °C, and a gas pressure, 10 torr, in each case, were assessed to be 1.750 mmol/g and 1.877 mmol/g for sample 1 and sample 2, respectively.
Adsorption behavior of sample 2 shows an increase in adsorption capacity for N₂O by approximately (8 to 9) % at conditions given, which would correspond to a transformation of approximately half of the amount of binder the beads were comprised of originally, into a material with properties of an "active thinner".

### EXAMPLE 4: Adsorption of n-Butane by High-silica MFI-type Zeolite Adsorbents with Passive and Active Thinner Properties.

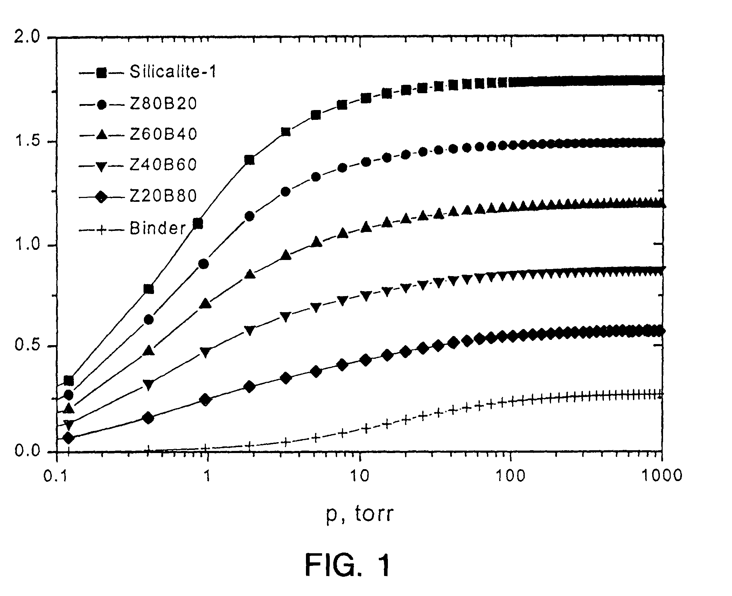

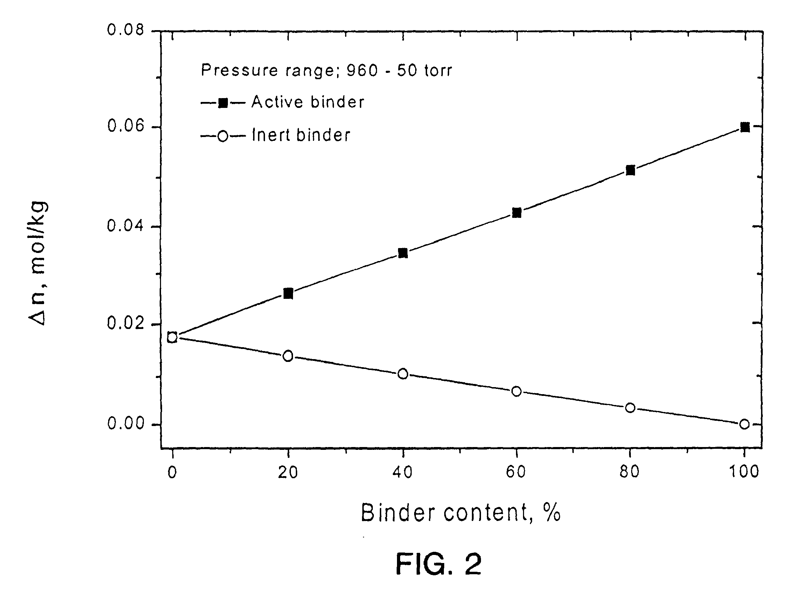

Based on adsorption data for n-butane, n-C₄, on silicalite-1 crystals which are of the MFI structural type, measured at 25°C, adsorption isotherms were modeled by the *Langmuir* isotherm equation, for secondary particles with different content of binder that acts as both "passive thinner" and "active thinner", *cf.,* Fig. 1. For the "active thinner" case, an adsorption isotherm for n-C₄ on a hypothetical binder was calculated assuming that the n-C₄ adsorption saturation capacity and the adsorption constant amount to 15 % of that for silicalite-1, and to one hundredth of that for the n-C₄/silicalite-1 system, respectively. The adsorption isotherms for n-C₄ on the pure zeolite (full squares) and the pure binder (crosses) are also shown in Fig. 1. Dependences, Δnₛ = f(C_{binder}), for the "passive thinner" and "active thinner" cases of the system n-C₄/silicalite-1 over a pressure envelope that would be characteristic of an appropriate pressure-vacuum swing adsorption process, viz., (960 ⇔ 50) torr, and at a temperature, 25°C, are shown in Fig. 2. The expected behavior for the two cases was found.

### EXAMPLE 5: Adsorption of n-Butane by High-silica FAU-type Zeolite Adsorbents with Passive and Active Thinner Properties.

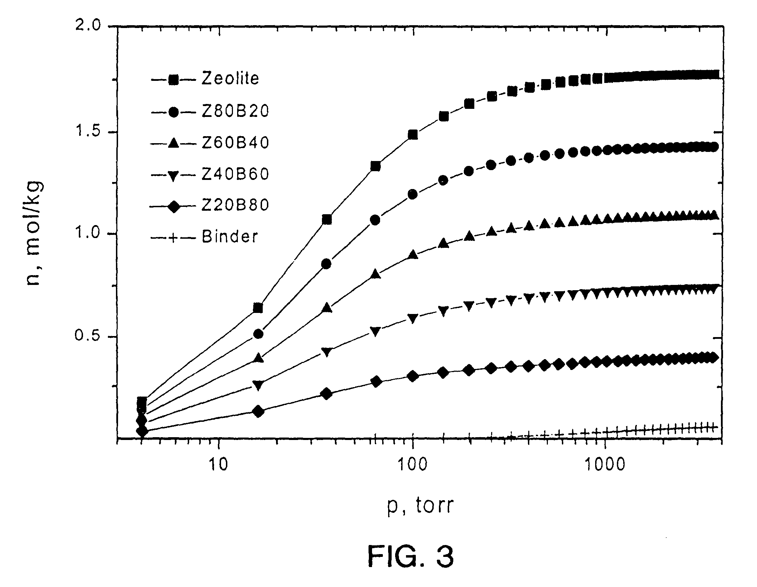

Based on adsorption data for n-butane, n-C₄, on extrudates of a high-silica FAU-type with a silicon-to-aluminum ration of about 100, which were measured at a temperature, 45 °C, in our laboratory by means of a piezometric system as described by M. Bülow et al., J. Chem. Soc., Faraday Trans. I, vol. **79** (1983) 2457-2466, adsorption isotherms were modeled by the *Langmuir-Freundlich* isotherm equation for the zeolite crystals in the extrudates, and for secondary particles with different content of binder that is assumed to act as both "passive thinner" and "active thinner". Considering the "active thinner" case, a n-C₄ adsorption isotherm for the binder used, viz., a commercial sepiolite-type mineral binder (cf., Example 2), was calculated assuming that the n-C₄ adsorption saturation capacity and the adsorption constant amount to 15 % of that for the FAU-type zeolite crystals, and to one hundredth of that for the n-C₄/FAU-type crystal system, respectively. The adsorption isotherms for n-C₄ on the FAU-type crystals (full squares) and on pure binder (crosses) are shown in Fig. 3, together with those for various compositions "active component vs. binder" presupposing an "active thinner" case.

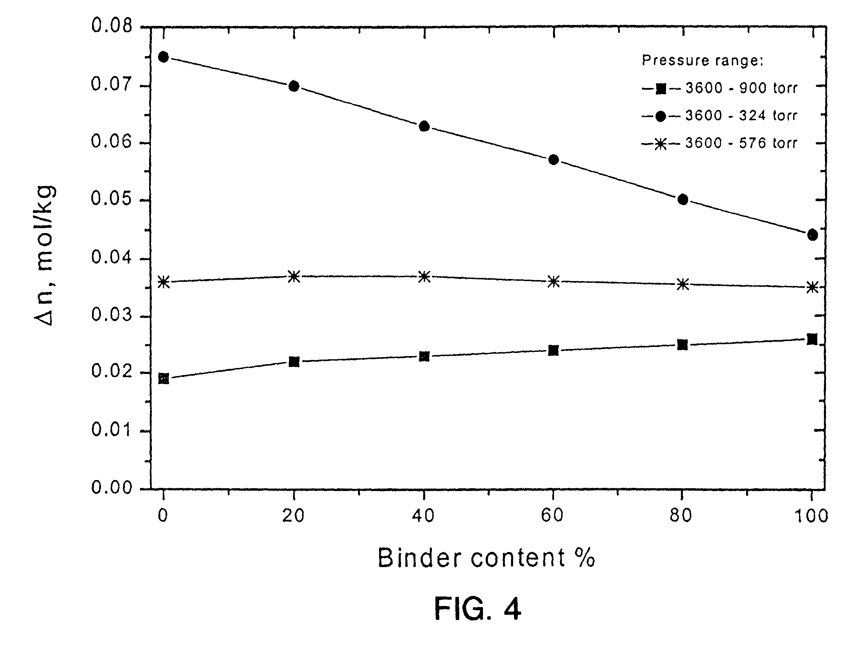

Fig. 4 shows dependences, Δnₛ = f(c_{binder}), for "active thinner" cases of various n-C₄/extrudate systems with varying binder content, at temperature, 45°C, over three different pressure ranges.

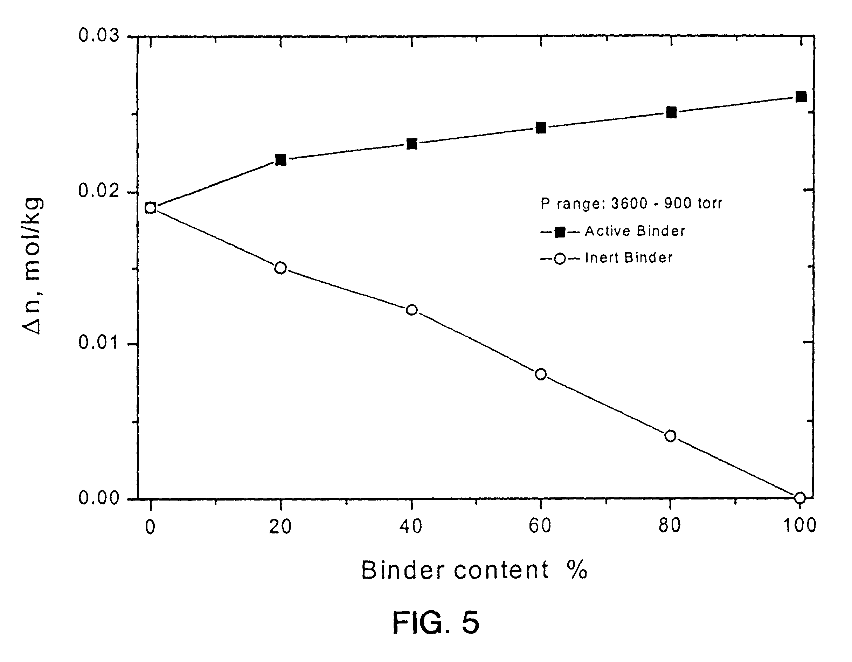

In general, it becomes obvious from results therein that in order to make best use of optimized compositions "active component vs. binder" of this invention, a thorough consideration of those compositions in conjunction with PSA process regime parameters, may be needed. For example, as can be seen from Fig. 4, there may be pressure envelopes such as (3600 ⇔ 324) torr, which represents a PVSA process, for which the "active thinner" concept fails. On the other hand, since the pressure swing, (3600 ⇔ 900) torr, is close to that what could be used for practical processes, a comparison between the "active thinner" and "passive thinner" cases for n-C₄/FAU-type zeolite systems is specified in Fig. 5.

For the n-C₄/FAU-type zeolite system, the advantage of the "active thinner" case is evident from the figures, in particular from Fig. 5. As a result, for the separation of mixtures comprised of carbon dioxide and n-butane by means of highly siliceous zeolites such as of the MFI and MEL as well as FAU structural types, the use of particles such as beads and/or extrudates with an "active-thinner" binder content as high as (40 to 80) wt.-% is advantageous.

This result can equally be considered as being applicable to mixtures with other low-molecular-weight hydrocarbon gases such as propane.

### EXAMPLE 6 (HYPOTHETICAL): Adsorption of Nitrous Oxide and Trace Impurities by High-alumina FAU-type Zeolite Adsorbents with Passive and Active Thinner Properties.

In this example, testing with regard to the removal of N₂O and low-molecular-weight hydrocarbon gases from air is projected on the basis of "active thinner" properties of a binder material used to manufacture finished adsorbent particles, in accordance with Example 1, sample 2. The finished adsorbent particles were represented by (8-12) mesh beads composed of a CaLSX zeolite (originally: 88 wt.-% of the finished adsorbent particles) with a calcium cation exchange value of > 95 %, and SiO₂ (originally: 12 wt.-% of the finished adsorbent particles) as binder with originally "inert thinner" properties only, which, however, showed, in accordance with Example 3, an estimated increase in adsorption capacity of approximately (8 to 9) % for N₂O at conditions given therein. Thus, a portion of the binder ("passive thinner") had been transformed into a material that carries "active-thinner" properties. Tests are supposed to be performed on a typical bench-scale TSA unit used for the pre-purification of air in front of its cryogenic distillation. The nitrous oxide and hydrocarbons assumed to be in the test-air feed stream at the indicated concentrations are set forth in the first and third columns from the left of Table 1.

**TABLE 1**

| **Feed Impurity Concentration, ppm** | **CaLSX: % Removal** | **Feed Impurity Concentration, ppm** | **CaLSX+Active Thinner: % Removal** |
|---|---|---|---|
| **(1)** | **(2)** | **(3)** | **(4)** |
| Water (saturated) | (not considered*) | Water (saturated) | (not considered*) |
| CO₂ (400) (not considered*) | | CO₂ (400) | (not considered*) |
| N₂O (0.30-0.35) 100 | | N₂O(0.32-0.38) | 100 |
| CH₄ (2.2) 0 | | CH₄ (2.4) | 0 |
| C₂H₂ (0.40-0.48) 100 | | C₂H₂ (0.43-0.52) | 100 |
| C₂H₄ (1.4-1.6) 100 | | C₂H₄ (1.51-1.73) | 100 |
| C₂H₆ (1.4) 10 | | C₂H₆ (1.51) | 10 |
| C₃H₆ (0.55-0.75) 100 | | C₃H₆ (0.59-0.86) | 100 |
| C₃H₈ (1.5-1.6) 25 | | C₃H₈ (1.62-1.73) | 25 |
| n-C₄H₁₀(1.6-1.8) 100 | | n-C₄H₁₀ (1.73-1.94) | 100 |

| | | | |
|---|---|---|---|
| * Removal of water and carbon dioxide is meant to occur by layers composed of other adsorbents that are located up-stream in the adsorption column. | | | |

These hydrocarbons are selected based on the results of a series of relevant air quality surveys. The concentrations of the hydrocarbons were set based on the maximum observed values in the air quality surveys, cf., column 1. The trace impurity concentrations in the feed air differ, however, for the two experiments: In the "active thinner" case they are increased by about 8 % as obvious from a comparison of numbers in column 3 with those in column 1, from the left of Table 1. The lower detection limits of all the above compounds were established by FTIR analysis. The adsorption temperature, feed gas pressure, superficial velocity, and bed height are assumed to be 25° C, 85.6 psia, 0.59 ft/sec, and 59 inch, respectively. The projected results of this TSA PPU test experiment are reported in columns 2 and 4 of Table 1.

Table 1 shows that it is projected that the finished adsorbent particles in the "active thinner" case allow for a removal of increased concentrations of the trace impurities in the gas stream, including N₂O and a series of hydrocarbons present.

While this invention has been described with respect to particular embodiments thereof, it is apparent that numerous other forms and modifications of the invention will be obvious to those skilled in the art. The appended claims and this invention generally should be construed to cover all such obvious forms and modifications which are within the true spirit and scope of the present invention.

## Claims

1. An adsorbent composition comprising at least one active adsorbent component and at least one thinner component, wherein their respective weight percentages in said adsorbent composition range from 20 % to 95 % and from 80 % to 5 %**characterised in that** the said thinner component is active and contributes to the intrinsic adsorption properties of the adsorbent composition.

2. An adsorbent composition as claimed in claim 1 wherein said active adsorbent component is selected from the group consisting of the zeolite structural types BEA, CHA, EMT, ERI, FAU, FER, HEU, LTA, LTL, MAZ, MEI, MEL, MFI, MOR, MTW, OFF, ZSM-2, ZSM-18, ZSM-20, or mixtures thereof.

3. An adsorbent composition as claimed in claim 2, wherein the active adsorbent component is a calcium-exchanged zeolite with an exchange value in the range of 80 to 98%.

4. An adsorbent composition as claimed in any one of the preceding claims, wherein said at least one thinner component is selected from the group consisting of clays, silicas, aluminas, and metal oxides, and mixtures thereof.

5. An adsorbent composition as claimed in any one of the preceding claims, wherein said at least one thinner component is selected from the group consisting of attapulgite, bentonite, kaolin and sepiolite materials and mixtures thereof.

6. An adsorbent composition as claimed in any one of the preceding claims, wherein said at least one thinner component is one that has been converted into either partly or entirely an active thinner component by an additional chemical and/or thermal treatment.

7. An adsorbent composition as claimed in any one of the preceding claims, which is in the shape of a bead, an extrudate, a hollow extrudate, a monolith or a laminate.

8. A process of separating a gas component from a gas mixture comprising subjecting said gas mixture to an adsorption process comprising the steps:
(a) passing said gas mixture through at least one adsorption zone containing an adsorbent composition comprising the adsorbent composition as claimed in any one of the preceding claims at a selected temperature and a selected pressure, thereby preferentially adsorbing said gas component from said gas mixture, and
(b) regenerating said adsorbent composition at a temperature higher than said selected temperature, at a pressure lower than said selected pressure, or at both a temperature higher than said selected temperature and a pressure lower than said selected pressure.

9. A process as claimed in claim 8, wherein said gas component is nitrogen and said gas mixture is air.

10. A process as claimed in claim 8, wherein said gas component is an alkene and said gas mixture is an alkene-alkane mixture.

11. A process as claimed in claim 8, wherein said gas component is an alkane and said gas mixture is comprised of alkane, carbon dioxide and water.

12. A process as claimed in claim 8, wherein said gas component is nitrous oxide and said gas is air.

## Patentansprüche

1. Adsorptionsmittelzusammensetzung mit mindestens einer aktiven Adsorptionsmittelkomponente und mindestens einer dünneren Komponente, wobei ihre jeweiligen Gewichtsprozentsätze in der Adsorptionsmittelzusammensetzung von 20% bis 95% und von 80% bis 5% reichen, **dadurch gekennzeichnet, daß** die genannte dünnere Komponente aktiv ist und zu den der Adsorptionsmittelzusammensetzung innewohnenden Adsorptionseigenschaften beiträgt.

2. Adsorptionsmittelzusammensetzung nach Anspruch 1, wobei die genannte aktive Adsorptionsmittelkomponente aus der Gruppe ausgewählt ist, die aus den Zeolithstrukturtypen BEA, CHA, EMT, ERI, FAU, FER, HEU, LTA, LTZ, MAZ, MEI, MEL, MFI, MOR, MTW, OFF, ZSM-2, ZSM-18, ZSM-20, oder Gemischen hiervon besteht.

3. Adsorptionsmittelzusammensetzung nach Anspruch 2, wobei die aktive Adsorptionsmittelkomponente ein Kalzium-ausgetauschtes Zeolith mit einem Austauschwert im Bereich von 80 bis 98% ist.

4. Adsorptionsmittelzusammensetzung nach einem der vorhergehenden Ansprüche, wobei die genannte mindestens eine dünnere Komponente aus der Gruppe ausgewählt ist, die aus Tonen, Siliziumoxiden, Aluminiumoxiden und Metalloxiden und Gemischen hiervon besteht.

5. Adsorptionsmittelzusammensetzung nach einem der vorhergehenden Ansprüche, wobei die genannte mindestens eine dünnere Komponente aus der Gruppe ausgewählt ist, die aus Attapulgit-, Bentonit-, Kaolin- und Sepiolit-Materialien und Gemischen davon besteht.

6. Adsorptionsmittelzusammensetzung nach einem der vorhergehenden Ansprüche, wobei die genannte mindestens eine dünnere Komponente eine solche ist, die entweder teilweise oder vollständig durch eine zusätzliche chemische und/oder thermische Behandlung in eine aktive dünnere Komponente umgewandelt worden ist.

7. Adsorptionsmittelzusammensetzung nach einem der vorhergehenden Ansprüche, das in Form eines Kügelchens, eines Extrudats, eines Hohlextrudats, eines Monolithen oder eines Laminats vorliegt.

8. Verfahren zum Trennen einer Gaskomponente aus einem Gasgemisch, wobei das Gasgemisch einem Adsorptionsprozeß mit den Schritten unterzogen wird:
(a) Hindurchleiten des Gasgemischs durch mindestens eine Adsorptionszone, die eine Adsorptionsmittelzusammensetzung enthält, die aus der Adsorptionsmittelzusammensetzung nach einem der vorhergehenden Ansprüche besteht, bei einer gewählten Temperatur und einem gewählten Druck, wodurch bevorzugt die genannte Gaskomponente aus dem Gasgemisch adsorbiert wird, und
(b) Regenerieren der Adsorptionsmittelzusammensetzung bei einer höheren Temperatur als der gewählten Temperatur, auf einem niedrigeren Druck als dem gewählten Druck, oder sowohl auf einer höheren Temperatur als der gewählten Temperatur und einem niedrigeren Druck als dem gewählten Druck.

9. Verfahren nach Anspruch 8, wobei die Gaskomponente Stickstoff ist und das Gasgemisch Luft ist.

10. Verfahren nach Anspruch 8, wobei die Gaskomponente ein Alken und das Gasgemisch ein Alken-Alkan-Gemisch ist.

11. Verfahren nach Anspruch 8, wobei die Gaskomponente ein Alkan ist und das Gasgemisch aus Alkan, Kohlendioxid und Wasser besteht.

12. Verfahren nach Anspruch 8, wobei die Gaskomponente Distickstoffoxid und das Gas Luft ist.

## Revendications

1. Composition adsorbante comprenant au moins un composant adsorbant actif et au moins un composant diluant ("thinner"), dont les pourcentages pondéraux respectifs dans ladite composition adsorbante sont compris dans une plage de 20 % à 95 % et de 80 % à 5 %, ***caractérisée en ce que*** ledit composant diluant est actif et contribue aux propriétés intrinsèques d'adsorption de la composition adsorbante.

2. Composition adsorbante selon la revendication 1, dans laquelle ledit composant adsorbant actif est choisi dans le groupe se composant des types structuraux de zéolithe BEA, CHA, EMT, ERI, FAU, FER, HEU, LTA, LTL, MAZ, MEI, MEL, MFI, MOR, MTW, OFF, ZSM-2, ZSM-18, ZSM-20, ou de mélanges de ceux-ci.

3. Composition adsorbante selon la revendication 2, dans laquelle le composant adsorbant actif est une zéolithe échangée au calcium avec une valeur d'échange comprise dans une plage de 80 à 98 %.

4. Composition adsorbante selon l'une quelconque des revendications précédentes, dans laquelle ledit au moins un composant diluant est choisi dans le groupe se composant des argiles, des silices, des alumines et des oxydes métalliques, et de mélanges de ceux-ci.

5. Composition adsorbante selon l'une quelconque des revendications précédentes, dans laquelle ledit au moins un composant diluant est choisi dans le groupe se composant des matériaux d'attapulgite, de bentonite, de kaolin et de sépionite, et de mélanges de ceux-ci.

6. Composition adsorbante selon l'une quelconque des revendications précédentes, dans laquelle ledit au moins un composant diluant est un composant diluant qui a été converti, soit partiellement, soit totalement, en un composant diluant actif par un traitement chimique et/ou thermique supplémentaire.

7. Composition adsorbante selon l'une quelconque des revendications précédentes, qui se présente sous la forme d'une bille, d'un extrudat, d'un extrudat creux, d'un monolithe ou d'un laminé.

8. Procédé de séparation d'un composant gazeux d'un mélange gazeux, comprenant la soumission dudit mélange gazeux à un procédé d'adsorption comprenant les étapes consistant à :
(a) faire passer ledit mélange gazeux à travers au moins une zone d'adsorption contenant une composition adsorbante comprenant la composition adsorbante selon l'une quelconque des revendications précédentes à une température sélectionnée et une pression sélectionnée, adsorbant ainsi préférentiellement ledit composant gazeux dudit mélange gazeux, et
(b) régénérer ladite composition adsorbante à une température supérieure à ladite température sélectionnée, à une pression inférieure à ladite pression sélectionnée, ou à la fois à une température supérieure à ladite température sélectionnée et une pression inférieure à ladite pression sélectionnée.

9. Procédé selon la revendication 8, dans lequel ledit composant gazeux est l'azote et ledit mélange gazeux est l'air.

10. Procédé selon la revendication 8, dans lequel ledit composant gazeux est un alcène et ledit mélange gazeux est un mélange alcène-alcane.

11. Procédé selon la revendication 8, dans lequel ledit composant gazeux est un alcane et ledit mélange gazeux est composé d'alcane, de dioxyde de carbone et d'eau.

12. Procédé selon la revendication 8, dans lequel ledit composant gazeux est l'oxyde nitreux et ledit gaz est l'air.
